# EUROPEAN PATENT APPLICATION

(11) **EP 2 605 313 A1**
(43) Date of publication of application: **19.06.2013**
(21) Application number: 11193678.7
(22) Date of filing: 15.12.2011
(51) Int. Cl.: H01M 2/26, H01M 2/30

(54) **Connecting contact leads to lithium-based electrodes**

(71) Applicant: Oxis Energy Limited, Abingdon Oxfordshire OX14 3DB (GB)
(72) Inventor: Lilley, Scott Joseph, Dundee, DD2 1EW (GB); Ivanov, Gleb, Oxford, OX1 5JQ (GB); Kolosnitsyn, Vladimir, 450052 Ufa (RU)
(74) Representative: Harrison Goddard Foote LLP

(57) **Abstract**

There is disclosed a method of connecting a lithium electrode to a contact lead in a rechargeable battery. The electrode comprises a sheet or foil of lithium or lithium alloy with a tab protruding from an edge of the sheet or foil. The contact lead comprises an electrically conductive lead with an end portion made of a second metal that does not alloy with lithium and has a plurality of through holes. The end portion of the contact lead and the tab of the electrode are positioned so that there is substantial overlap between the end portion and the tab. The metal of the tab is then caused, for example by pressing and welding, to penetrate through the through holes of the end portion so as to join the electrode to the contact lead. A combination electrode/contact lead assembly made by this method is also disclosed.

## Description

The present invention relates to the connection of a lithium or lithium alloy foil electrode or electrodes to a contact lead, so as to promote good electrical and mechanical contact therebetween.

### BACKGROUND

Primary and rechargeable batteries using metallic lithium as the active material for the negative electrode are known to have the highest energy per unit weight and per unit volume.

For the purposes of the present application, the following definitions are to be considered:

A negative electrode, or anode, is a lithium or lithium alloy foil component having a negative potential. A negative electrode typically features a current collector and a contact tab.

A current collector is an electrically conductive metallic foil used to provide a path for electrons from the external electrical circuit to the electrochemically active portion of the battery. A current collector will typically feature a contact tab.

A contact tab is a metal foil portion of the current collector, which does not take part in the electrochemical process. It may extend from an edge of the main body of the current collector and is used to form the mechanical base for a weld to a contact lead.

A contact lead is a piece of electrically conductive metallic material used to form an electrical contact from the contact tab through a hermetically sealed battery container to the external electrical circuit. It is typically welded (in cells where metallic lithium is not used) or mechanically connected to the contact tab.

The contact lead must be connected or joined to the lithium in such a manner that a low resistance electrical connection is formed. Further, the connection or join must be mechanically strong enough to last for the expected life of the battery.

The current collectors in lithium primary batteries are typically composed of a metallic conductor other than lithium. The contact lead may be exposed to the electrolyte in an electrochemically active zone of the battery. This is not generally a problem in primary batteries; however it may cause problems in rechargeable (or secondary) batteries. In secondary batteries, lithium must be electrochemically deposited when the battery is recharged. In order to provide good reproducibility of performance, when the battery is repeatedly recharged, an excess of lithium is used so that lithium is only ever deposited onto lithium. If the contact lead or current collector is left exposed, then lithium will be plated onto a non-lithium substrate. This greatly increases the probability of unpredictable lithium deposition and hence poor cycling performance. This typically takes the form of active dendrite formation resulting in the quick degradation of the rechargeable lithium system. Examples of such failure mechanisms are described in US5368958, the full disclosure of which is incorporated into the present application by reference.

In a secondary battery with a lithium-based anode, the lithium is typically connected to the external circuit by one of two methods. Either a contact lead similar in design to that described for primary lithium batteries is used; as in US7335440, the full disclosure of which is incorporated into the present application by reference. US7335440 discloses the provision of a current collector in the form of a flat, solid piece of titanium, nickel, copper or an alloy of nickel or copper. The current collector is provided with a contact tab. A relatively long strip of alkali metal foil, having a width similar to the height of the current collector, is placed under the current collector and the two are pressed together. It is to be noted that, following assembly of the battery, the current collector (which is not made of an alkali metal) is immersed in electrolyte. Moreover, US7335440 states that this arrangement has problems in coiled, anode-limited cells of the type disclosed therein since there is a potential for a short circuit to be formed between the cathode material and the anode current collector when the thin layer of lithium has substantially depleted into the cathode in the outermost winding.

A variation of this method uses the metallic cell casing for the dual purpose of collecting current from the lithium, as in US7108942, the full disclosure of which is incorporated into the present application by reference. Additionally, the reverse face of the lithium electrode may be pressed or rolled against a thin metal current collector, as in US5368958, the full disclosure of which is incorporated into the present application by reference. The current collector can then be welded to a metal contact lead. However, if the current collector becomes exposed to the electrolyte, there is a risk that lithium will be plated onto the non-lithium current collector with the possible formation of dendrites that may short-circuit the battery. The metal current collector also adds unnecessary mass to the battery and reduces its specific energy.

In all of the examples described above, the contact of metallic lithium with the current collector is purely mechanical, which may be acceptable for primary batteries. However, for lithium metal rechargeable batteries such mechanical contact is not reliable. Indeed due to the reactive character of metallic lithium, corrosion layers may readily form on the interface of the mechanical connection between the lithium and the current collector. This may result in lower battery reliability as well as faster degradation in the capacity and cycle life of rechargeable lithium metal batteries.

### BRIEF SUMMARY OF THE DISCLOSURE

Viewed from a first aspect, there is provided a method of connecting at least one electrode to a contact lead, wherein the electrode comprises a sheet or foil of a first metal with a tab protruding from an edge of the sheet or foil, and wherein the contact lead comprises an electrically conductive lead with an end portion made of a second metal that does not alloy with the first metal and having a plurality of through holes, the method comprising the steps of:
i) positioning the end portion of the contact lead and the tab of the at least one electrode so that there is substantial overlap between the end portion and the tab;
ii) causing the metal of the tab to penetrate through the through holes of the end portion so as to join the at least one electrode to the contact lead.

In step ii), the metal of the tab may be caused to penetrate through the through holes by pressing and welding, for example by way of ultrasonic welding, thermal contact welding, laser welding or induction welding. Advantageously, the welding is effected in such a way so as not to cause significant thermal deformation or changes in the main laminar sheet or foil of the at least one electrode, but to concentrate the applied energy in the locality of the tab.

The end portion of the contact lead may be substantially flat or planar, or may take other shapes or configurations depending, for example, on the shape or configuration of any welding equipment that is used.

In some embodiments, there may be provided a plurality of electrodes, each comprising a sheet or foil of the first metal with a tab protruding from each sheet in substantially the same location, so that the tabs of the stack of electrodes are substantially aligned when the electrodes are aligned with each other and arranged as an electrode stack.

In these embodiments, the perforated end portion of the contact lead may be placed on top of the tabs of the electrode stack, underneath the tabs of the electrode stack, or at an intermediate position between the top and the bottom (i.e. with at least one tab above and at least one tab below). The tabs and the perforated end portion are then pressed together and the first metal (of the tabs) is caused to penetrate through the holes in the perforated planar end portion (made of the second metal) of the contact lead. Alternatively, the tabs of the electrode stack may be pressed together before the perforated end portion is placed on top of or underneath the compressed tabs and the penetration of step ii) is performed.

In embodiments where there is provided a stack of electrodes, the pressing and welding step causes the tabs to join together physically as well as to penetrate into the through holes of the contact lead.

Particularly preferred metals for the first metal are lithium and lithium alloys, since these tend to be useful as anode materials in secondary batteries, and are also soft and malleable, which allows a good connection to be made with the perforated end portion of the contact lead when the pressing and welding step is performed.

The end portion of the contact lead may be perforated, punched or have a mesh-like or reticulated form. What is important is that when the first metal of the tabs is sufficiently malleable that it can pass through the through holes so as to cause the second metal of the end portion to become embedded in what is preferably a single phase of the first metal. This forms an intimate contact between the first and second metals, and thus between the contact lead and the electrodes.

The greater the openness or surface area of the end portion of the contact lead, the better the electrical (and physical) connection between the contact lead and the electrodes. The openness of the end portion may be defined as the ratio of open area to the full surface area of the end portion. The openness of the end portion of the contact lead may be in the range of 5% to 95%.

The electrically conductive lead of the contact lead may itself be generally planar, for example in the form of a ribbon, although other profiles may be useful. The electrically conductive lead may be made of the same metal as the second metal forming the end portion, or of a different metal.

In this way, it is possible for form a reliable connection with a contact lead made of a metal other than the metal of the electrode. It will be understood that the contact lead, which will generally be exposed outside the casing of the battery, must be made of a metal that has good electrical conductivity but is not highly reactive when exposed to air or moisture. Suitable metals include nickel, copper, stainless steel or various alloys.

Moreover, the metal of the contact lead, since it is connected only to the protruding tabs of the electrodes, is not directly exposed to electrolyte when the battery is assembled.

A further advantage is that a good connection can be made to the at least one electrode without the electrode as a whole needing to be formed or disposed on a current collector made of a metal other than the first metal. In other words, the main part of the electrode that is exposed to the electrolyte consists solely of the first metal (e.g. lithium or a lithium alloy), with no need for a copper or nickel or other current collector that would add unnecessary weight and act as a substrate for the formation of dendrites during cycling.

Moreover, it is important that the second metal (of the contact lead) is selected so that it does not form an alloy with the first metal (of the electrode). This is in order to avoid reduction of the amount of the first metal that is available to the electrochemical system of the battery. For example, lithium will form an alloy with aluminium, but not with nickel or copper.

In certain embodiments, the electrode is configured as an anode, or negative electrode, for a battery. However, it will be appreciated that the method is applicable also to cathodes, or positive electrodes, where these are made of a metal that is suitable for pressing and welding to a perforated second metal as described.

Viewed from a second aspect, there is provided, in combination, at least one electrode for a battery and a contact lead, wherein the electrode comprises a sheet or foil of a first metal with a tab protruding from an edge of the sheet or foil, and wherein the contact lead comprises an electrically conductive lead with an end portion made of a second metal that does not alloy with the first metal and having a plurality of through holes, wherein the first metal of the tab has been pressed and welded so as to penetrate through the through holes of the second metal end portion.

Embodiments of the present invention seek to provide a negative electrode (anode) eliminating the need for the current collector, and a method of forming a reliable physical contact between different pieces of metallic lithium and the contact lead, thereby to promote good electrical contact between metallic lithium and the material of the contact lead.

In preferred embodiments, an excess of metallic lithium is used such that at the end of the battery life there is a substantial amount of lithium metal which serves as the current collector for the negative electrode. The use of lithium as the current collector eliminates mechanical contact between metal lithium and another current collector material.

In some embodiments, there may be provided a plurality of electrodes, each comprising a sheet or foil of the first metal with a tab protruding from each sheet in substantially the same location, so that the tabs of the stack of electrodes are substantially aligned when the electrodes are aligned with each other and arranged as an electrode stack.

The lithium metal of the negative electrode in the region of the tabs may form a single phase connection from lithium electrode to lithium electrode in the electrode stack. Such connection is achieved by using pressing and welding as hereinbefore described.

The contact lead, or at least the end portion thereof, may be thin (for example, with a thickness of 5 to 50µm), or may be thick (for example, with a thickness of 50 to 10,000µm).

The contact lead may be substantially linear, or may have a 'T'-shaped or 'L'-shaped configuration.

The end portion of the contact lead may be an integral part of the contact lead (in other words, formed from the same material as the rest of the contact lead and integral therewith), or may be a separate metal component, not necessarily of the same material as the rest of the contact lead, and welded thereto (for example by ultrasonic welding, thermal contact welding, laser welding, induction welding or other types of welding).

### BRIEF DESCRIPTION OF THE DRAWINGS

Embodiments of the invention are further described hereinafter with reference to the accompanying drawings, in which:
FIGURES 1a to 1c shows a battery stack with anodes, cathodes and tabs, and three alternative positionings for a contact lead;
FIGURES 2a to 2e shows possible designs for the contact lead; and
FIGURE 3 shows the contact lead being ultrasonically welded to the tabs.

### DETAILED DESCRIPTION

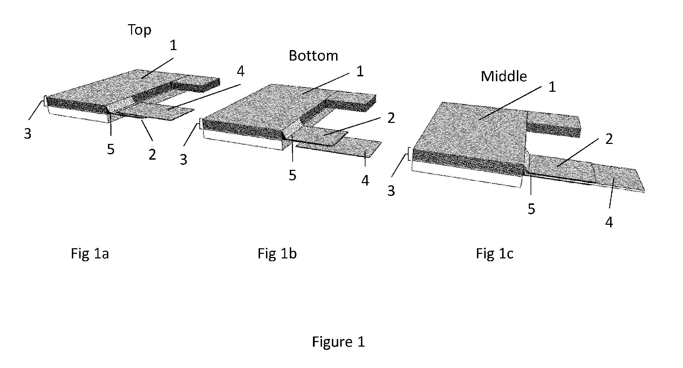

A battery can be formed by an alternating stack of numerous cathodes and anodes. Each of these layers is divided by a separator. An ionic pathway is maintained by the presence, between each electrode, of an electrolyte. Each electrode 1 features a tab 2 protruding from its electrochemically active area and beyond the edge of the separator. These tabs 2 provide the first surface through which the stack 3 of lithium anodes will be welded to each other and joined to a contact lead 4. The tabs 2 are first folded and/or formed by pressing. A contact lead 4 is then positioned at the top **(****Figure 1a****)** or bottom **(****Figure 1b****)** of the stack 5 of tabs 2, or it may be positioned between any two lithium tabs 2 **(****Figure 1c****)**.

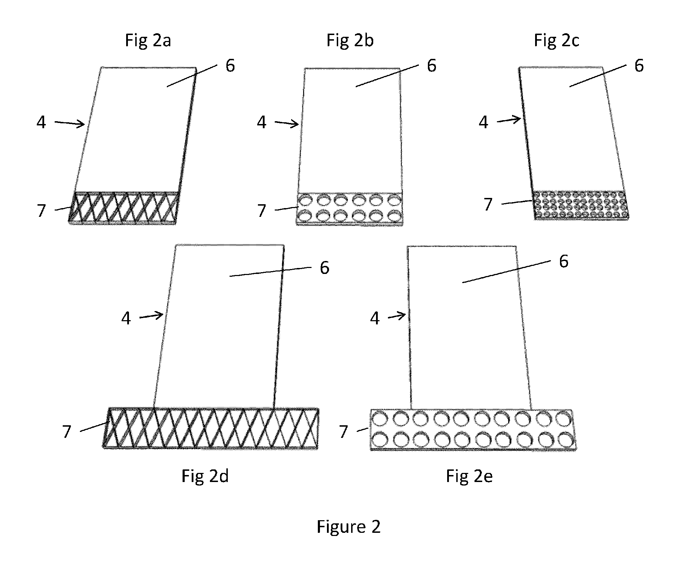

The contact leads 4 may take a number of forms **(****Figures 2a to 2e****)**. The body 6 is composed of a conductive metal ribbon, typically nickel, copper, stainless steel or some composite conductor. The end portion 7 (the area to be welded) is typically perforated, meshed or punched. The end portion 7 may be an integral part of the metal ribbon 6, or it may be a separate piece welded to the ribbon 6. Where the end portion 7 is a separate piece welded to the ribbon 6, it may be made of a different metal to that of the ribbon 6. The contact may be linear, "T" or "L" shaped. The perforations may be rhombic, circular, square, rounded, polygonal or any other suitable shape.

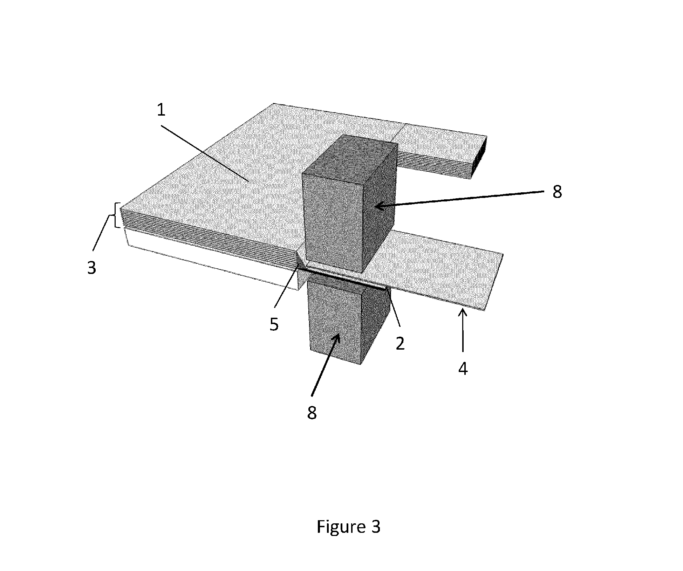

The tabs 2 and the contact lead 4 are then positioned between the two weld fixtures 8 of an ultrasonic welder **(****Figure 3****)**. The ultrasonic welder then simultaneously applies pressure and an ultrasonic wave to the weld area. This causes the numerous lithium layers 2 to fuse together to form a lithium-lithium weld. Further, the softened lithium percolates through the perforated or meshed area 7 of the contact lead 4. The contact lead 4 is hence joined to the lithium 2 as the mesh 7 is intimately surrounded by lithium. The high surface area contact between the mesh 7 of the contact lead 4 and the lithium electrode 1 produces a low resistance and a mechanically strong electrical contact. When the ultrasonic wave ceases and the pressure is released, the contact lead 4 will be joined to the lithium anodes 1.

### EXAMPLE 1

A linear nickel contact lead, composed of 50µm thick nickel ribbon, was used. The endmost 5mm of the contact lead was expanded to form a mesh. A battery with 60 lithium anodes, each of 78µm thickness, was assembled. A stack of lithium contact tabs protruded from the battery. The lithium contact tabs were formed and trimmed to produce a flat welding area and to ensure that each of the tabs, regardless of its position, in the stack used the minimum quantity of lithium. The formed stack of lithium tabs was then positioned between the welding fixtures of an ultrasonic welder. The contact lead was then positioned on top of the stack of lithium tabs, such that the meshed region overlapped with the flat lithium welding zone. The welding conditions listed in **Table 1** were then entered into an AmTech 900B 40kHz ultrasonic welder. A single weld was then performed. Each of the 60 lithium layers were welded firmly to each other. A strong join was produced between the lithium and the contact lead. This join had been created by the softened lithium penetrating through the mesh of the contact lead.

**Table 1 - The welder setting used in Example 1.**

| **Energy / J** | **Amplitude / µm** | **Trigger Pressure / Psi** | **Pressure / Psi** |
|---|---|---|---|
| 180 | 5 | 20 | 20 |

### EXAMPLE 2

A "T" shaped contact lead was made by welding a piece of nickel ribbon (50µm thick) to a piece of copper mesh. The mesh opening was approximately 200x700µm, with a bar width of 100µm. The mesh was thrice as long as the nickel ribbon was wide. The mesh was 5mm wide; the same as the welding zone. The mesh was positioned centrally to form the cross of the "T" and welded into position by an ultrasonic welder using the conditions given in **Table 2, weld A.** The contact lead was positioned between the welding fixtures of an ultrasonic welder such that the meshed region fell into the welding zone.

A battery with 20 lithium anodes, each of 78µm thickness, was assembled. A stack of lithium contact tabs protruded from the battery. The stack of lithium contact tabs was formed and trimmed to produce a flat welding area and to ensure that each of the contact tabs, regardless of its position, in the stack used the minimum quantity of lithium.

The stack of lithium contact tabs was then positioned on top of the contact lead, between the welding fixtures of an ultrasonic welder. The copper mesh "arms" of the "T" shaped contact lead were then folded around the stack of lithium contact tabs. The welding conditions listed in **Table 2, weld B** were then entered into an AmTech 900B 40kHz ultrasonic welder. A single weld was then performed. Each of the 20 lithium layers were welded firmly to each other. A strong join was produced between the lithium and the contact lead. This join had been created by the softened lithium penetrating through the mesh of the contact lead.

**Table 2 - The welder settings used in Example 2**

| **Weld** | **Energy / J** | **Amplitude / µm** | **Trigger Pressure / Psi** | **Pressure / Psi** |
|---|---|---|---|---|
| **A** | 70 | 80 | 80 | 5 |
| **B** | 10 | 5 | 20 | 20 |

### EXAMPLE 3

An "L" shaped contact lead was manufactured by photochemical etching from a sheet of 100µm thick stainless steel. The upright section of the "L" is continuous steel foil. The base of the "L" was etched with a mesh pattern. The mesh opening was 500x500µm and the bar width was 100µm. The base of the "L" was twice the width of the upright section. The width of the base section was 5mm, the same as the weld zone.

A battery with 20 lithium anodes, each of 78µm thickness, was assembled. A stack of lithium contact tabs protruded from the battery. The contact lead was positioned between the top face to the lowermost lithium contact tab and the bottom face of the remainder of the stack. The remainder of the stack of lithium contact tabs was pushed down onto the meshed region of the contact lead. The protruding meshed section of the contact lead was folded over the stack of contact tabs. The contact assembly was positioned between the welding fixtures of an ultrasonic welder such that the meshed regions fell into the welding zone.

The welding conditions listed in **Table 3** were then entered into an AmTech 900B 40kHz ultrasonic welder. A single weld was then performed. Each of the 20 lithium layers were welded firmly to each other. A strong join was produced between the lithium and the contact lead. This join had been created by the softened lithium penetrating through the mesh of the contact lead.

**Table 3 - The welder settings used in Example 3**

| **Energy / J** | **Amplitude / µm** | **Trigger Pressure / Psi** | **Pressure / Psi** |
|---|---|---|---|
| 40 | 5 | 20 | 20 |

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method of connecting at least one electrode to a contact lead, wherein the electrode comprises a sheet or foil of a first metal with a tab protruding from an edge of the sheet or foil, and wherein the contact lead comprises an electrically conductive lead with an end portion made of a second metal that does not alloy with the first metal and having a plurality of through holes, the method comprising the steps of:
i) positioning the end portion of the contact lead and the tab of the at least one electrode so that there is substantial overlap between the end portion and the tab;
ii) causing the metal of the tab to penetrate through the through holes of the end portion so as to join the at least one electrode to the contact lead.

2. A method according to claim 1, wherein, in step ii), the metal of the tab is caused to penetrate through the through holes by pressing and welding.

3. A method according to claim 2, wherein the welding is ultrasonic welding.

4. A method according to claim 2, wherein the welding is thermal contact welding, laser welding or induction welding.

5. A method according to any one of claims 2 to 4, wherein the welding does not cause significant thermal deformation or changes in the laminar sheet or foil of the at least one electrode, but concentrates the applied energy in the locality of the tab.

6. A method according to any one of the preceding claims, wherein there is provided a plurality of electrodes, each comprising a sheet or foil of the first metal with a tab protruding from each sheet in substantially the same location, so that the tabs of the stack of electrodes are substantially aligned when the electrodes are aligned with each other and arranged as an electrode stack.

7. A method according to claim 6, wherein the perforated end portion of the contact lead is placed on top of the tabs of the electrode stack in step i).

8. A method according to claim 6, wherein the perforated end portion of the contact lead is placed underneath the tabs of the electrode stack in step i).

9. A method according to claim 6, wherein the perforated end portion of the contact lead is placed at an intermediate position between the top and the bottom of the electrode stack in step i).

10. A method according to any one of claims 7 to 9, wherein the tabs and the perforated end portion are then pressed together and the first metal is caused to penetrate through the holes in the perforated end portion of the contact lead.

11. A method according to claim 7 or 8, wherein the tabs of the electrode stack are pressed together before the perforated end portion is placed on top of or underneath the compressed tabs and the penetration of step ii) is performed.

12. A method according to any preceding claim, wherein the end portion of the contact lead is an integral part of the contact lead.

13. A method according to any one of claims 1 to 11, wherein the end portion of the contact lead is a separate metal component that is welded to the contact lead.

14. A method according to any preceding claim, wherein the first metal is lithium or a lithium alloy.

15. A method according to any preceding claim, wherein the second metal is selected from a group comprising: nickel, copper, a nickel or copper alloy that does not alloy with lithium, and stainless steel.

16. In combination, at least one electrode for a battery and a contact lead, wherein the electrode comprises a sheet or foil of a first metal with a tab protruding from an edge of the sheet or foil, and wherein the contact lead comprises an electrically conductive lead with an end portion made of a second metal that does not alloy with the first metal and having a plurality of through holes, wherein the first metal of the tab has been pressed and/or welded so as to penetrate through the through holes of the second metal end portion.
